# EUROPÄISCHE PATENTSCHRIFT

(11) **EP 1 773 122 B1**
(45) Veröffentlichungstag und Bekanntmachung des Hinweises auf die Patenterteilung: **12.11.2014**
(21) Anmeldenummer: 05781984.9
(22) Anmeldetag: 28.07.2005
(51) Int. Cl.: A01N 31/08, A01N 55/00, A01P 3/00

(54) **VERWENDUNG VON ORTHO-PHENYLPHENOL UND/ODER DESSEN DERIVATEN ZUR HEMMUNG DER ASEXUELLEN VERMEHRUNG VON PILZEN**
USE OF ORTHO-PHENYLPHENOL AND/OR DERIVATIVES THEREOF FOR INHIBITING THE ASEXUAL REPRODUCTION OF FUNGI
UTILISATION D'ORTHO-PHENYLPHENOL ET/OU DE DERIVES DE CELUI-CI POUR INHIBER LA REPRODUCTION ASEXUEE DE CHAMPIGNONS

(30) Priorität: 05.08.2004 DE 102004038104
(43) Veröffentlichungstag der Anmeldung: 18.04.2007
(73) Patentinhaber: Henkel AG & Co. KGaA, 40589 Düsseldorf (DE)
(72) Erfinder: WEIDE, Mirko, 40223 Düsseldorf (DE); SCHLÖSSER, Anja, 47462 Neuss (DE); BOCKMÜHL, Dirk, 42113 Wuppertal (DE); BREVES, Roland, 40822 Mettmann (DE); BOLTE, Andreas, 40627 Düsseldorf (DE); GERKE, Thomas, 41468 Neuss (DE); SCHUNK, Achim, 40593 Düsseldorf (DE)
(86) Internationale Anmeldenummer: PCT/EP2005/008178
(87) Internationale Veröffentlichungsnummer: WO 2006/015725

(56) Entgegenhaltungen:
- EP-A- 1 018 413
- EP-A- 1 205 525
- WO-A-96/06153
- DE-A1- 4 411 237
- GB-A- 1 417 117
- US-A- 3 002 883
- US-A- 3 674 510
- US-A- 4 666 706
- DATABASE EPODOC EUROPEAN PATENT OFFICE, THE HAGUE, NL; 1. August 1995 (1995-08-01), "Adhesive for apparatus for holding optical device" XP002363549 -& JP 07 197009 A (OLYMPUS OPTICAL CO LTD) 1. August 1995 (1995-08-01)
- DATABASE WPI Section Ch, Week 197905 Derwent Publications Ltd., London, GB; Class C03, AN 1979-09018B XP002363551 -& JP 53 145865 A (UENO PHARM CO LTD) 19. Dezember 1978 (1978-12-19)
- HEGNA I K: "A COMPARATIVE INVESTIGATION OF THE BACTERICIDAL AND FUNGICIDAL EFFECTS OF 3 PHENOLIC DISINFECTANTS" JOURNAL OF APPLIED BACTERIOLOGY, Bd. 43, Nr. 2, 1977, Seiten 177-182, XP009060202 ISSN: 0021-8847
- APELBAUM A ET AL: "EFFECT OF ALTERING TREATMENT CONDITIONS DURING POSTHARVEST APPLICATION OF SODIUM O-PHENYLPHENATE ON O PHENYLPHENOL RESIDUES AND RIND INJURIES IN VARIOUS CITRUS FRUITS" FOOD ADDITIVES AND CONTAMINANTS, Bd. 4, Nr. 3, 1987, Seiten 317-324, XP009060145 ISSN: 0265-203X

## Beschreibung

Die Erfindung betrifft ortho-Phenylphenol und/oder dessen Derivate enthaltende Filtermedien, Klebstoffe, Baustoffe, Bauhilfsstoffe, Textilien, Pelze, Papier, Felle oder Leder.

Pilze, insbesondere Schimmelpilze, verursachen erhebliche Probleme im Bereich der Baubiologie, da die von ihnen in die Raumluft abgegebenen Sporen häufig allergieerzeugend sind. Eine Bekämpfung solcher Pilze mit bioziden Wirkstoffen geht mit einem erhöhten Risiko der Resistenzbildung einher, so dass nach einiger Zeit neue antimikrobielle Substanzen gefunden werden müssen, die gegen diese resistent gewordenen Mikroorganismen wirken. Biozide sind außerdem ökologisch und toxikologisch nicht immer unbedenklich. Zu den unerwünschten Wirkungen der Verbreitung von Schimmelpilzen gehören insbesondere Verfärbungen (beispielsweise an Wänden, Fugendichtungsmassen und Badoberflächen), die durch pigmentierte Sporen hervorgerufen werden.

Immer häufiger werden empfindliche Textilien, wie z. B. Seide oder Mikrofaser, zu Kleidungsstücken verarbeitet, die nur bei 30 oder 40 °C gewaschen werden können. Dadurch werden Pilze, wie beispielsweise die humanpathogene *Candida albicans,* nicht abgetötet. Insbesondere nach einer Pilzinfektion kann es durch solche auf Kleidungsstücken haftenden, nicht abgetöteten Pilze zu einer Reinfektion kommen.

Daher wurden bisher antimikrobielle Substanzen eingesetzt, die entweder das Wachstum der Pilze hemmen (Fungistatika) oder diese abtöten (Fungizide). Häufig werden dazu nicht-selektive antimikrobielle Substanzen eingesetzt, die sowohl gegen Bakterien als auch gegen Pilze wirken. Nachteilig ist daran, dass solche z. B. in Wasch- und Reinigungsmitteln verwendeten Biozide oder Biostatika die Abwässer belasten und somit auch die mikrobiellen Klärstufen in den Kläranlagen in ihrer Funktion beeinträchtigen.

Im Stand der Technik ist bekannt, dass ortho-Phenylphenol in hohen Konzentrationen eingesetzt, geeignet ist, das Wachstum von Pilzen zu hemmen (fungistatische Wirkung) oder auch die Pilze abzutöten (fungizide Wirkung). Im Stand der Technik ist nicht beschrieben, dass ortho-Phenylphenol zur Hemmung der asexuellen Vermehrung von Pilzen (insbesondere Sporenbildung) eingesetzt werden kann. Naturgemäß führt eine generelle Wachstumshemmung ebenfalls zu einer Hemmung der asexuellen Vermehrung, insbesondere der Sporulation. Im Stand der Technik ist nicht bekannt, dass ortho-Phenylphenol die asexuelle Vermehrung von Pilzen, insbesondere Sporulation, vermindern und/oder ganz verhindern kann, ohne das Wachstum der Pilze an sich zu hemmen.

In der älteren, nicht vorveröffentlichten internationalen Patentanmeldung WO 03/051124 A2 wird beschrieben, dass Mono-, Sesqui- und/oder Diterpene sowie deren Derivate zur Hemmung der asexuellen Vermehrung von Pilzen verwendet werden können. Als besonders bevorzugter Wirkstoff wird Farnesol genannt. Die Verwendung von ortho-Phenylphenol zur Hemmung der asexuellen Vermehrung von Pilzen wird darin nicht beschrieben.

In den Patenten US 4,120,970 und US 3,674,510 wird beschrieben, dass ortho-Phenylphenol zur Konservierung von Früchten verwendet werden kann. Allerdings wird das ortho-Phenylphenol dort in für die Pilze toxischen Konzentrationen eingesetzt. Es wird somit nicht die asexuelle Vermehrung selbst inhibiert, wie dies erfindungsgemäß geschieht, sondern die Keime werden einfach abgetötet.

US 3,002,883 offenbart ein Waschmittel, enthaltend 0,0025 Gew.-% ortho-Phenylphenol. Eine Wirksamkeit des ortho-Phenylphenols gegenüber Pilzen wird laut US 3,002,883 allerdings ausdrücklich erst ab einer Konzentration von 0,0075 Gew.-% erzielt.

Aufgabe der Erfindung ist es daher, die Nachteile des Standes der Technik zu überwinden und die asexuelle Vermehrung von Pilzen, insbesondere die Sporulation von Schimmelpilzen, insbesondere auf Oberflächen, zu verhindern, ohne die Pilze abzutöten.

Überraschenderweise wurde gefunden, dass der Einsatz von ortho-Phenylphenol und/oder dessen Derivaten auf oder in durch Pilze befallenen Materialien die Ausbreitung der Pilze zu unterbinden vermag, ohne die Pilze abzutöten.

Gegenstand der vorliegenden Erfindung sind daher Filtermedien, Baustoffe, Bauhilfsstoffe, Textilien, Pilze, Papier, Felle oder Leder enthaltend 0,000001 bis 0,05 Gew.-% ortho-Phenylphenol und/oder dessen Derivaten zur Hemmung der asexuellen Vermehrung von Pilzen, wobei es sich bei den Derivaten um Ester oder Ether des ortho-Phenylphenols handelt.

Erfindungsgemäß umfasst der Begriff asexuelle Vermehrung insbesondere Sporenbildung, Knospung und Fragmentierung.

Zu den Derivaten von ortho-Phenylphenol zählen Ester und Ether von ortho-Phenylphenol, die durch Reaktion mit der phenolischen Hydroxylgruppe entstehen. Bei dem Carbonsäurerest des ortho-Phenylphenol-Esters kann es sich insbesondere um eine C₁₋₁₈-Alkyl-Carbonsäure, vorzugsweise eine C₁₋₁₂-Carbonsäure, oder um eine C₆₋₁₀-Aryl-C₁₋₆-alkyl-Carbonsäure handeln, wobei der Alkylrest verzweigt oder unverzweigt und gesättigt oder ungesättigt sein kann. Bei dem Alkoholrest des ortho-Phenylphenol-Ethers kann es sich insbesondere um einen C₁₋₁₈-Alkohol, vorzugsweise um einen C₁₋₆-Alkohol handeln.

Weitere erfindungsgemäß geeignete Derivate des ortho-Phenylphenols sind Ester des ortho-Phenylphenols mit Kieselsäuren gemäß den Formeln I und II. Die Herstellung der Kieselsäureester gelingt insbesondere durch einfache Umesterung von Kieselsäureestern (n=1) bzw. Oligokieselsäureestern (n>1) niederer Alkohole mit ortho-Phenylphenol. Je nach Reaktionszeit und - bedingungen werden die niederen Alkohole abgespalten und ortho-Phenylphenol gebunden, wobei die Alkohole entlang der Si-O-Si-Kette leichter ausgetauscht werden als die terminalen Alkohole.

Bevorzugte ortho-Phenylphenolkieselsäureester gemäß einer der Formeln (I) oder (II) und/oder deren Mischungen eingesetzt. 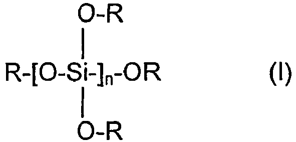 und 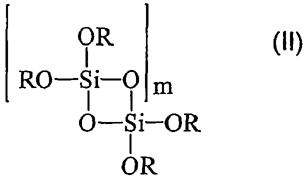 wobei mindestens ein R ortho-Phenylphenyl ist und alle anderen R unabhängig voneinander ausgewählt sind aus der Gruppe, die H, die geradkettigen oder verzweigten, gesättigten oder ungesättigten, substituierten oder unsubstituierten C₁₋₆-Kohlenwasserstoffreste, Terpenalkohole, sowie Polymere enthält, und m Werte aus dem Bereich 1 bis 20 und n Werte aus dem Bereich 1 bis 100 annimmt.

Nach einer weiteren bevorzugten Ausführungsform sind mindestens zwei oder drei Reste R ortho-Phenylphenyl.

Die Oligomerisierungsgrade "n" der erfindungsgemäßen Kieselsäureester liegen zwischen 1 und 20. In bevorzugten Verbindungen nimmt n Werte zwischen 1 und 15, vorzugsweise zwischen 1 und 12 und insbesondere zwischen 1 und 10 unter besonderer Bevorzugung der Werte 4, 5, 6, 7 und 8, an.

Die erfindungsgemäß verwendeten Kieselsäureester zeichnen sich durch eine gute Hydrolysestabilität aus und können auch in wäßrigen Medien bzw. in Herstellprozessen für Granulate, Dichtungsmassen, etc. eingesetzt werden, ohne dabei übermäßige Aktivitätsverluste zu erleiden. Die Freisetzung des Wirkstoffs aus den erfindungsgemäßen Stoffen erfolgt dadurch langsam und in vergleichsweise geringen Mengen, so dass über einen längeren Zeitraum kontinuierlich eine nicht fungizide bzw. fungistatische Konzentration der Wirkstoffe aus den Produkten freigesetzt wird.

Nach einer besonders bevorzugten Ausführungsform können sich ein oder mehrere Polymerreste an den Kieselsäureestern befinden. Bevorzugt werden solche Polymere zur Herstellung der Kieselsäureester eingesetzt, die freie Hydroxylgruppen enthalten. Insbesondere sind der oder die Polymerrest(e) ausgewählt aus Stärke und/oder dessen Derivaten, Cellulose und/oder dessen Derivaten, Polyvinylalkohol, Polyolen, Hydroxypolydimethylsiloxanen (ganz besonders α,ω-Dihydroxypolydimethylsiloxane) und Polyphenolen, insbesondere Polyvinylalkohol. Insbesondere ist es bevorzugt, wenn sich ein Polymerrest an den ortho-Phenylphenol tragenden Kieselsäureestern befindet. Für die Verwendung in Dichtungsmassen ist es besonders bevorzugt eher kurzkettige Polymere einzusetzen.

Diese spezielle Ausführungsform hat den Vorteil, dass man die Kieselsäureester je nach Anwendungsgebiet individuell auf den Anwendungszweck bzw. die - gegebenheiten anpassen kann. Beispielsweise sind solche Polymere besonders geeignet, die Einarbeitbarkeit der Stoffe zu verbessern, die Haftung, insbesondere an Oberflächen, zu erhöhen und die Freisetzungseigenschaften gewünschtermaßen zu beeinflussen.

Nach einer weiteren besonderen Ausführungsform zählen zu den ortho-Phenylphenol-Derivaten auch Ester des ortho-Phenylphenols mit Polymeren. Auch für diese Stoffe ergeben sich bessere Anpassbarkeit an den Anwendungszweck, beispielsweise ein besseres Aufziehen oder Anhaften an Oberflächen oder günstigere Bedingungen für die Einarbeitbarkeit. Die Hydrolyse dieser Esterbindung, z. B. bei sich wiederholendem Kontakt mit Wasser setzt langsam die Wirkstoffe frei, die dann die asexuelle Vermehrung von Pilzen hemmen können.

Besonders bevorzugt werden solche Stoffe durch Reaktion des ortho-Phenylphenols mit solchen Polymeren durchgeführt, die funktionelle Gruppen tragen, die insbesondere ausgewählt sind aus Säuregruppen, Säurechloridgruppen, Estergruppen, primären, sekundären und tertiären Amidgruppen.

Bevorzugterweise werden als Polymere erfindungsgemäß Polyacrylsäure, Polyacrylsäureester, Polymethacrylsäure, Polymethacrylsäureester, Polycarbonsäuren, (insbesondere Carboxymethylcellulose) sowie Copolymere aus dem zugrundeliegenden Monomer (auch mit anderen als den genannten Monomeren) und primäre, sekundäre oder tertiäre Polyacrylamide eingesetzt. Insbesondere sind dabei Kettenlängen von ca. 2000 bis 300000 g/mol bevorzugt.

Gemäß einer weiteren bevorzugten Ausführungsform können erfindungsgemäß auch Träger-gebundene Formen des ortho-Phenylphenols und/oder der zuvor genanntnen ortho-Phenylphenol-Derivate eingesetzt werden, insbesondere Käfigmoleküle, die mit ortho-Phenylphenol und/oder einem Derivat davon beladen sind.

Unter Käfigmolekülen sind im erfindungsgemäßen Zusammenhang insbesondere solche organischen makrocyclischen Moleküle zu verstehen, die eine käfigartige, räumliche Struktur aufweisen und in der Lage sind, als sogenannte Wirtsmoleküle ein oder mehrere sogenannte Gastmoleküle einzuschließen. Bevorzugt wird jeweils nur ein Gastmolekül eingeschlossen.

Die gezielte, langsame Freisetzung von den zur Hemmung der asexuellen Vermehrung von Pilzen geeigneten Verbindungen kann auch über Gleichgewichtseinstellung aus einer (häufig nicht kovalenten) Bindung oder durch Komplexierung der Verbindung aus einem Käfigmolekül stattfinden.

Die Einarbeitbarkeit der beladenen Käfigmoleküle in die erfindungsgemäßen Produkte, insbesondere in solche mit hydrophoberem Charakter, ist aufgrund der eher hydrophoben Außenhülle der Käfigsubstanzen besonders gut.

Ein besonders großer Vorteil der Verwendung von Käfigmolekülen ist, dass es möglich ist, die herausdiffundierten Substanzen nach einer längeren Zeit in den Produkten wieder zu ersetzen, indem die Käfigmoleküle wieder aufgeladen werden. Insbesondere sind hierzu konzentrierte Lösungen der genannten Wirkstoffe geeignet. Es ist in diesem Sinne ebenfalls möglich, Produkte herzustellen, die nicht von vornherein die freien Wirkstoffe komplexiert bzw. gebunden in den Käfigmolekülen enthalten, sondern erst in der Anwendungssituation durch diese beladen werden. Formulierungstechnisch ist das für dem Fachmann bekannte Einsatzgebiete sinnvoll.

Als organische Käfigmoleküle seien Cucurbiturile, Calixarene, Calixresorcarene, Cyclodextrine, Cyclophane, Kronenether, Fullerene, Cryptophane, Carceranden, Hemicarceranden, Cyclotriveratrylene, Spheranden und Cryptanden genannt.

Besonders bevorzugt sind erfindungsgemäß die Cucurbiturile, Calixarene und Calixresorcarene, ganz besonders Cucurbiturile.

Cucurbiturile und ihre Herstellung sind in der Literatur beschrieben, beispielsweise in der WO 00/68232 und der EP-A 1 094 065 sowie der dort zitierten weiteren Literatur. Unter einem im Sinne der Erfindung einsetzbaren Cucurbituril ist grundsätzlich jeder Stoff zu verstehen, der in der Literatur als zu dieser Verbindungsklasse gehörig beschrieben ist. Definitionsgemäß einbezogen sind hier die in der WO 00/68232 beschriebenen Cucurbiturile und substituierten Cucurbiturile sowie die in der EP-A 1 094 065 beschriebenen Cucurbituril-Derivate. Anstelle eines einheitlichen Cucurbiturils, substituierten Cucurbiturils oder Cucurbituril-Derivats können ebenso Mischungen von zwei oder mehr derartiger Verbindungen eingesetzt werden. Soweit im folgenden Text von einem Cucurbituril die Rede ist, und nicht ausdrücklich etwas anderes angegeben ist, ist darunter in gleicher Weise ein chemisch einheitliches Cucurbituril oder auch ein Gemisch zweier oder mehrerer Cucurbiturile, substituierter Cucurbiturile und/oder Cucurbituril-Derivate zu verstehen. Dementsprechend beziehen sich Mengenangaben von Cucurbiturilen, soweit nicht ausdrücklich etwas anderes angegeben ist, stets auf die Gesamtmenge des einen oder der mehreren Cucurbiturile, substituierten Cucurbiturile und/oder Cucurbituril-Derivate.

Im Sinne der vorliegenden Erfindung bevorzugt sind Cucurbit[n]urile der Ringgröße 5 bis 11, sowie deren Gemische, wobei Cucurbit[6]uril sowie Mischungen mit einem überwiegenden Anteil an Cucurbit[6]uril besonders bevorzugt sind.

Weiterhin können Calix[n]arene gemäß Formel (VIII) eingesetzt werden. 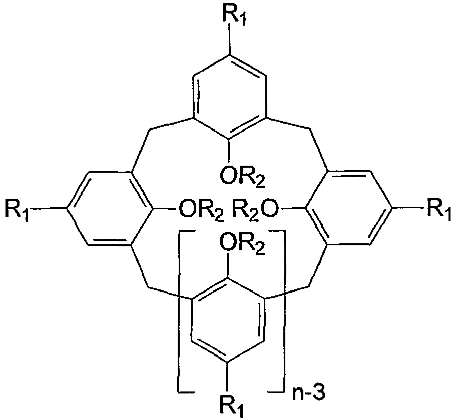 wobei
R₁ ausgewählt ist aus R₁ = H, Alkyl, Aryl, Alkenyl, Alkinyl sowie substituierten Alkylen, Arylen, Alkenylen, Alkinylen, die Gruppen tragen, die ausgewählt sind aus -OH, -OR', -NH₂, -NHR', -NR'R", NR'R"R"'⁺,NO₂, Halogen, SO₃H, SO₃M (M = Alkalimetalle, Erdalkalimetalle), Carbonsäuren, Ketonen, Aldehyden, Amiden, Estern, -SO₂NH₂ -SO₂NHR, -SO₂NR'R", -SO₂Halogen, schwefel-, phosphor-, siliziumhaltigen Gruppen.
   und
R₂ ausgewählt ist aus R₂ = H, Alkyl, Aryl, Alkenyl, Alkinyl, sowie substituierten Alkylen, Arylen, Alkenylen, Alkinylen , die Gruppen tragen, die ausgewählt sind aus -OH, -OR', -NH₂, -NHR', -NR'R", -NR'R"R"'⁺, -NO₂, Halogen, -SO₃H, - SO₃M (M = Alkalimetalle, Erdalkalimetalle), Carbonsäuren, Ketonen, Aldehyden, Amiden, Estern, -SO₂NH₂, -SO₂NHR', -SO₂NR'R", -SO₂Halogen, schwefel-, phosphor-, oder siliziumhaltigen Gruppen,
wobei R', R", R"' unabhängig von einander ausgewählt sind aus H, Alkyl, Aryl, Alkenyl, Alkinyl, substituierten Alkyle, Aryle, Alkenyle, Alkinyle

Bevorzugt sind dabei Calixarene gemäß Formel (VIII) für die gilt:
R₁ ausgewählt ist aus R₁ = H, Alkyl, Aryl, Alkenyl, Alkinyl sowie substituierten Alkylen, Arylen, Alkenylen, Alkinylen, die Gruppen tragen, die ausgewählt sind aus -OH, -OR', -NH₂, -NHR', -NR'R", NR'R"R"'⁺, NO₂, Halogen, SO₃H, Carbonsäuren, Ketonen, Aldehyden, Amiden, Estern, -SO₂NR'R".
   und
R₂ ausgewählt ist aus R₂ = H, Alkyl, Aryl, Alkenyl, Alkinyl, sowie substituierten Alkylen, Arylen, Alkenylen, Alkinylen , die Gruppen tragen, die ausgewählt sind aus -OH, -OR', -NH₂, -NR'R", -NR'R"R"'⁺, -NO₂, Halogen, -SO₃H, Carbonsäuren, Ketonen, Aldehyden, Amiden, Estern, -SO₂NR'R".
wobei R', R", R"' unabhängig von einander ausgewählt sind aus H, Alkyl, Aryl, Alkenyl, Alkinyl sowie substituierten Alkylen, Arylen, Alkenylen, Alkinylen.

Im Sinne der vorliegenden Erfindung bevorzugt sind Calix[n]arene der Ringgröße n= 4 bis 12, sowie deren Gemische, wobei Calix[6]- und/oder Calix[4]arene sowie Mischungen mit einem überwiegenden Anteil an Calix[6]- und/oder Calix[4]arene besonders bevorzugt sind.

Darüber hinaus sind Calix[n]resorcarene, auch als Resorcinarene bekannt, gemäß Formel IX zu verwenden. N gibt dabei die Zahl der Kettenglieder an und kann 4 oder 6 betragen. 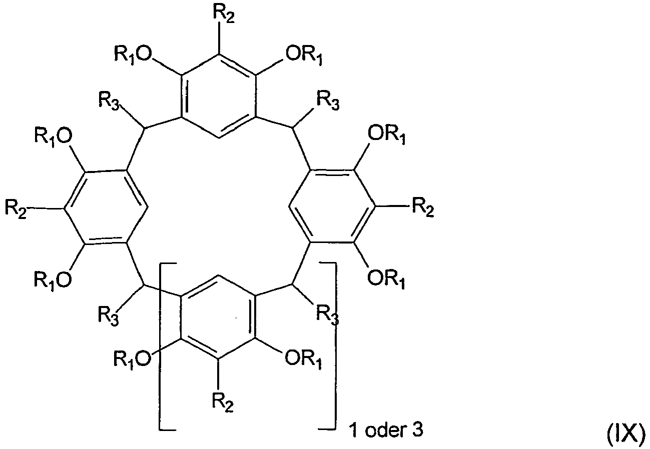 wobei R₁, R₂ und R₃ ausgewählt sind aus:
R₁= H, Alkyl, Aryl, Alkenyl, Alkinyl, sowie substituierten Alkylen, Arylen, Alkenylen, Alkinylen, die Gruppen tragen, die ausgewählt sind aus -OH, -OR, -NH₂, -NHR', - NR'R", NR'R"R"'⁺ , -NO₂, Halogen, SO₃H, SO₃M (M = Alkalimetalle, Erdalkalimetalle), Carbonsäuren, Ketone, Aldehyde, Amide, Ester, SO₂NH₂, SO₂NHR, SO₂NR₂, SO₂Halogen, schwefel-, phosphor-, siliziumhaltige Gruppen
   und
R₂,R₃ unabhängig von einander ausgewählt sind aus R₂, R₃= H, Alkyl, Aryl, Alkenyl, Alkinyl, sowie substituierten Alkylen, Arylen, Alkenylen, Alkinylen, die Gruppen tragen, die ausgewählt sind aus -OH, -OR, -NH₂, -NHR, NR'R", NR'R"R"'⁺, -NO₂, Halogen, -SO₃H, -SO₃M (M = Alkalimetalle, Erdalkalimetalle), Carbonsäuren, Ketonen, Aldehyden, Amiden, Estern, -SO₂NH₂, -SO₂NHR, - SO₂NR₂, -SO₂Halogen, schwefel-, phosphor-, siliziumhaltige Gruppen,
und wobei R', R", R'" unabhängig von einander ausgewählt sind aus H, Alkyl, Aryl, Alkenyl, Alkinyl sowie substituierten Alkylen, Arylen, Alkenylen, Alkinylen.
Bevorzugt sind Calix[4]resorcarene und/oder Calix[6]resorcarene gemäß Formel (IX), für die gilt, dass
R₁ ausgewählt ist aus R₁ = H, Alkyl, Aryl, Alkenyl, Alkinyl sowie substituierten Alkylen, Arylen, Alkenylen, Alkinylen, die Gruppen tragen, die ausgewählt sind aus -OH, -OR', -NH₂, -NHR', -NR'R", NR'R"R"'⁺, NO₂, Halogen, SO₃H, Carbonsäuren, Ketonen, Aldehyden, Amiden, Estern, -SO₂NR'R".
   und
R₂,R₃ unabhängig von einander ausgewählt sind aus R₂, R₃= H, Alkyl, Aryl, Alkenyl, Alkinyl, sowie substituierten Alkylen, Arylen, Alkenylen, Alkinylen , die Gruppen tragen, die ausgewählt sind aus -OH, -OR', -NH₂, -NR'R", -NR'R"R"'⁺, -NO₂, Halogen, -SO₃H, Carbonsäuren, Ketonen, Aldehyden, Amiden, Estern, - SO₂NR'R".
wobei R', R", R'" unabhängig von einander ausgewählt sind aus H, Alkyl, Aryl, Alkenyl, Alkinyl sowie substituierten Alkylen, Arylen, Alkenylen, Alkinylen.

Insbesondere ist es bevorzugt, wenn R₂ = R₃ ist, d.h. R₂ und R₃ die gleichen Substitutenten darstellen.

Gemäß einer weiteren Ausführungsform sind die Träger-gebundenen Formen des ortho-Phenylphenols bzw. des ortho-Phenylphenol-Derivats in einer Menge bis zu 50 Gew.-% enthalten, bevorzugt in einer Menge von 1 bis 20 Gew.-% und insbesondere in einer Menge von 5 bis 15 Gew.-%.

Vorteilhafterweise werden die Pilze bei der erfindungsgemäßen Verwendung weder in ihrem Wachstum gehemmt noch abgetötet, es wird lediglich die asexuelle Vermehrung gehemmt bzw. unterdrückt. Der Selektionsdruck für die Bildung von Resistenzen ist daher gering.

Überraschenderweise wurde gefunden, dass der Einsatz von ortho-Phenylphenol und/oder dessen Ester oder Ether die asexuelle Vermehrung von Pilzen besser, d.h. in geringerer Konzentration als das Farnesol, hemmen kann.

Ein weiterer Vorteil der Erfindung ist es, dass ortho-Phenylphenol und/oder dessen Ester oder Ether im Vergleich mit Fungiziden oder Fungistatika bereits in geringen Endkonzentrationen wirksam sind und daher kaum unerwünschte Nebenwirkungen befürchtet werden müssen.

Gemäß einer bevorzugten Ausführungsform werden ortho-Phenylphenol und/oder dessen Ester oder Ether zur Hemmung der Sporenbildung verwendet. Unter Sporenbildung ist dabei sowohl die Bildung von Vermehrungsformen z.B. Konidien, Gonitocysten, Sporangiosporen, Arthrosporen, Blastosporen und deren assoziierten Organen (z.B. Konidiophoren) als auch von Dauerformen (z.B. Chlamydosporen) zu verstehen.

Da Schimmelpilzsporen in der Raumluft ubiquitär vorhanden sind, kann ein Schimmelbefall nicht grundsätzlich verhindert werden. Die Hemmung der Sporulation der auswachsenden Pilzkolonien bietet allerdings die Möglichkeit, das Risiko einer Schimmelpilzallergie erheblich zu verringern und die Verbreitung des Pilzes vollständig aufzuhalten bzw. beträchtlich zu verzögern. Verfärbungen aufgrund von Sporenbildung werden ebenfalls stark vermindert oder vollständig verhindert.

Die Verwendung von ortho-Phenylphenol und/oder dessen Ester oder Ether zur Hemmung der Sporenbildung weist weiterhin den Vorteil auf, dass die zur Sporulationshemmung einzusetzende notwendige Konzentration überraschenderweise im Vergleich zu anderen Sesquiterpenen, beispielsweise Farnesol, noch deutlich niedriger ist. So kann ein vergleichbarer Effekt auch mit geringerer Konzentration an Wirkstoff erreicht werden.

Ortho-Phenylphenol und/oder dessen Ester oder Ether werden in solchen Endkonzentrationen eingesetzt, dass sie nicht fungizid (pilzabtötend) oder fungistatisch (pilzwachstumshemmend) wirken. Ein besonderer Vorteil ist es, dass das Risiko einer Resistenzbildung gegenüber den verwendeten Stoffen gering ist, da die Pilze weder abgetötet noch ihr Wachstum gehemmt werden. Diese minimalen Hemmkonzentrationen können in dem Fachmann bekannter Weise einfach bestimmt werden.

In einer besonderen Ausführungsform wird ortho-Phenylphenol und/oder ein Ester oder Ether davon, gegebenenfalls in Träger-gebundener Form, in Kombination mit einem bioziden, insbesondere fungiziden Mittel eingesetzt, wobei sehr geringe, insbesondere nicht fungizide bzw. nicht fungistatische, Konzentrationen an ortho-Phenylphenol verwendet werden. Durch diese kombinierte Verwendung kann vorteilhafterweise ein synergistischer Effekt erzielt werden, indem zum einen durch das Biozid Keime abgetötet bzw. in ihrer Keimreifung unterdrückt werden und zum anderen durch das ortho-Phenylphenol bzw. dessen Ester oder Ether gegebenenfalls überlebende Keime in ihrer asexuellen Vermehrung inhibiert werden. Auch in dieser Anwendungsform wird aufgrund der niedrigen Konzentration an ortho-Phenylphenol vorteilhafterweise die Resistenzbildung gegenüber ortho-Phenylphenol verhindert. Gegenstand der vorliegenden Erfindung sind daher auch erfindungsgemäß beschriebene Mittel, die neben ortho-Phenylphenol und/oder einem Ester oder Ether davon mindestens ein Biozid, insbesondere Fungizid, enthalten. Das Biozid kann insbesondere ausgewählt sein aus Bioziden wie sie in folgenden Literaturstellen beschrieben sind:

K. H. Wallhäuser, "Praxis der Sterilisation, Desinfektion, Konservierung", 5.überarbeitete Aufl., 1995 (ISBN 3134163055), Georg Thieme Verlag, Stuttgart Stuttgart, insbesondere Tabelle 1.60 (S. 103-105), Tabelle, 5.11 (S. 406), Tabelle 5.12 (S. 407), Tabelle 5.13, Tabelle 5.14, Tabelle 5.15 (S. 412-414), Tabelle 6.5, Tabelle 6.6 (S. 426), Tabellen 6.7 und 6.8, Seite 434, Abbildungen 6.4, 6.5, 6.6 und 6.8, Tabelle 6.13 (S. 436) sowie Kapitel 7 ("Antimikrobielle Wirkstoffe", S. 465 ff.),

S. S. Block, "Disinfection, Sterilization, and Preservation", 5th edition, 2000 (ISBN 0-683-30740-1), Lippincott Williams &% Wilkens, Philadelphia, insbesondere Tabellen 7.2, 8.1, 8.2, 9.5, 9.6, 9.7, 9.11, 9.12, 9.13, 9.14, 10.3, 12.2-12.6, 13.1-13.4, 14.1, 14.2, 14.6, 14.7, 14.8, 14.17, 14.19-14.25, 15.1, 16.2, 17.2, 17.3, 18.1, 18.2, 19.1 und 20.2 sowie Abbildungen 13.1 und 20.1-20.4,

Liste der nach den "Richtlinien für die Prüfung chemischer Desinfektionsmittel" geprüften und von der Deutschen Gesellschaft für Hygiene und Mikrobiologie als wirksam befundenen Desinfektionsverfahren, mhp-Verlag GmbH, Wiesbaden.

ortho-Phenylphenol und/oder dessen Ester oder Ether sind in den erfindungsgemäßen Mitteln in Mengen von 0,000001 bis 0,005 Gew.-% enthalten. Ein besonderer Vorteil dieser Ausführungsform ist es, dass nur geringe Konzentrationen dieser Stoffe vorhanden sein müssen, damit die asexuelle Fortpflanzung der Pilze vermindert bzw. im wesentlichen ganz verhindert wird. Bevorzugt sind ortho-Phenylphenol und/oder dessen Ester oder Ether zu 0,00001 bis 0,005 Gew.-% und insbesondere zu 0,00005 und 0,005 Gew.-% enthalten.

Die erfindungsgemäße Wirkung von ortho-Phenylphenol und/oder dessen Ester oder Ether ist insbesondere zur Hemmung der asexuellen Vermehrung aller Pilze geeignet, die in den Stammlisten "DSMZ - List of Filamentous Fungi" und "DSMZ - List of Yeasts" der DSMZ (Deutsche Stammsammlung von Mikroorganismen und Zellkulturen GmbH, Braunschweig) aufgeführt sind. Die Listen sind im Internet unter der Adresse (http://www.dsmz.de/species/fungi.htm) bzw. (http://www.dsmz.de/species/yeasts.htm) einsehbar.

Dazu sind zum Beispiel die humanpathogenen Spezies der Klassen Ascomycota, Basidiomycota, Deuteromycota und Zygomycota zu zählen, insbesondere alle Spezies der Gattungen Aspergillus, Penicillium, Cladosporium und Mucor, die humanpathogenen Formen von Candida sowie *Stachybotrys, Phoma, Alternaria, Aureobasidium, Ulocladium, Epicoccum, Stemphyllium, Paecilomyces, Trichoderma, Scopulariopsis, Wallemia, Botrytis, Verticillium und Chaetonium.*

Zu den Ascomycota gehören hier insbesondere alle Spezies der Gattungen Aspergillus, Penicillium und Cladosporium. Diese Pilze bilden Sporen aus, die bei Kontakt mit der Haut oder den Atemwegen ein stark allergieauslösendes Potential aufweisen. Zu den Basidiomycota ist beispielsweise Cryptococcus neoformans zu zählen. Zu den Deuteromycota sind alle als Schimmelpilze bekannten Gattungen zu zählen, insbesondere solche, die durch das Fehlen eines sexuellen Stadiums nicht den Klassen Ascomycota, Basidiomycota oder Zygomycota zugeordnet werden.

Die erfindungsgemäße Verwendung von ortho-Phenylphenol und/oder dessen Ester oder Ether ist besonders bevorzugt zur Hemmung der Sporenbildung bei allen Spezies der Gattung Aspergillus geeignet, ganz besonders bevorzugt bei Spezies, die ausgewählt sind unter Aspergillus aculeatus, Aspergillus albus, Aspergillus alliaceus, Aspergillus asperescens, Aspergillus awamori, Aspergillus candidus, Aspergillus carbonarius, Aspergillus carneus, Aspergillus chevalieri, Aspergillus chevalieri var. intermedius, Aspergillus clavatus, Aspergillus ficuum, Aspergillus flavipes, Aspergillus flavus, Aspergillus foetidus, Aspergillus fumigatus, Aspergillus giganteus, Aspergillus humicola, Aspergillus intermedius, Aspergillus japonicus, Aspergillus nidulans, Aspergillus niger, Aspergillus niveus, Aspergillus ochraceus, Aspergillus oryzae, Aspergillus ostianus, Aspergillus parasiticus, Aspergillus parasiticus var. globosus, Aspergillus penicillioides, Aspergillus phoenicis, Aspergillus rugulosus, Aspergillus sclerotiorum, Aspergillus sojae var. gymnosardae, Aspergillus sydowi, Aspergillus tamarii, Aspergillus terreus, Aspergillus terricola, Aspergillus toxicarius, Aspergillus unguis, Aspergillus ustus, Aspergillus versicolor, Aspergillus vitricolae und Aspergillus wentii.

Gemäß einer besonders bevorzugten Ausführungsform werden ortho-Phenylphenol und/oder dessen Ester oder Ether ganz besonders bevorzugt zur Hemmung der Sporenbildung bei Spezies der Gattung Aspergillus eingesetzt, die ausgewählt sind unter *Aspergillus flavus* und *Aspergillus nidulans.*

Die Ausrüstung des Papiers, der Textilien, von Wandbehangsstoffen, Pelzen, Fellen oder Leder erfolgt in dem Fachmann bekannter Weise, beispielsweise durch Eintauchen des Papiers oder der Textilien, Pelze, Felle oder Leder in eine geeignet konzentrierte Lösung eines erfindungsgemäß eingesetzten Mittels.

Die Ausrüstung der Filtermedien, Baustoffe oder Bauhilfsstoffe erfolgt beispielsweise durch mechanisches Einarbeiten oder Aufbringen einer geeignet konzentrierten Lösung eines erfindungsgemäß eingesetzten Mittels in bzw. auf die Filtermedien, Baustoffe oder Bauhilfsstoffe. ortho-Phenylphenol und Lösungen von ortho-Phenylphenol, vorzugsweise in organischen Lösungsmitteln, können vorteilhafterweise besonders gut auf bzw. in solche Bau- und Bauhilfsstoffe aufgebracht bzw. eingearbeitet werden. Eine nachträgliche Ausrüstung der Bau- bzw. Bauhilfsstoffe oder eine Wiederaufladung nach längerem Gebrauch bereits ausgerüsteter Bau- bzw. Bauhilfsstoffe, beispielsweise bei Dichtungsmassen, durch Auftragen der erfindungsgemäß eingesetzten Mittel ist daher problemlos möglich.

Vorzugsweise sind die erfindungsgemäß ausgerüsteten Baustoffe oder Bauhilfsstoffe ausgewählt unter Klebe-, Dichtungs-, Spachtel- und Anstrichmassen, Kunststoffen, Lacken, Farben, Putz, Mörtel, Estrich, Beton, Isoliermaterialien sowie Grundierungen. Besonders bevorzugte Baustoffe oder Bauhilfsstoffe sind Fugendichtungsmassen (bspw. silikonhaltige Fugendichtungsmassen), Tapetenkleister, Putz, Teppichfixierer, Silikonkleber, Dispersionsfarben, Anstrichmassen für den Innen- und/oder Außenbereich und Fliesenkleber.

Dichtungsmassen und insbesondere Fugendichtungsmassen enthalten typischerweise organische Polymere sowie in vielen Fällen mineralische oder organische Füllstoffe und sonstige Additive.

Geeignete Polymere sind beispielsweise thermoplastische Elastomere, wie in der DE-A-3602526 der Anmelderin beschrieben, vorzugsweise Polyurethane und Acrylate. Geeignete Polymere sind auch in den Offenlegungsschriften DE-A-3726547, DE-A-4029504 und DE-A-4009095 der Anmelderin sowie in DE-A-19704553 und DE-A-4233077 genannt, auf die hiermit in vollem Umfang Bezug genommen wird.

Die erfindungsgemäßen Dichtungsmasssen (Dichtstoffe bzw. Dichtstoffmischungen) enthalten 0,000001 bis 0,005, insbesondere 0,00001 bis 0,005, besonders bevorzugt 0,00005 bis 0,005, Gew.-% ortho-Phenylphenol und/oder dessen Ester oder Ether.

Erfindungsgemäß kann die Ausrüstung der erfindungsgemäßen Dichtstoffe sowohl im ungehärteten oder bei unter 60 °C gehärteten Zustand erfolgen. Dichtstoffe sind im erfindungsgemäßen Zusammenhang Materialien gemäß DIN EN 26927, insbesondere solche, die plastisch oder elastisch als Dichtstoffe aushärten. Die erfindungsgemäßen Dichtstoffe können alle für die entsprechenden Dichtungsmassen typischen Zusatzstoffe, wie z.B. typische Verdickungsmittel, verstärkende Füllstoffe, Vernetzer, Vernetzungskatalysatoren, Pigmente, Haftmittel oder sonstige Volumenextender enthalten. ortho-Phenylphenol und/oder dessen Derivate können durch Eindispergieren in dem Fachmann bekannter Weise z.B. durch die Verwendung von Dispergiereinrichtungen, Kneter, Planetenmischer usw., unter Ausschluss von Feuchtigkeit und Sauerstoff sowohl in die fertige als auch in Teile dieser Dichtungsmassen bzw. zusammen mit einer oder mehreren Komponenten der Dichtungsmassen eingearbeitet werden.

Selbst die Behandlung von bereits ausgehärteten, vernetzten Dichtungsmassenoberflächen kann durch Aufbringen von Lösungen bzw. Suspensionen der erfindungsgemäß verwendeten Substanz durchgeführt werden, indem der Wirkstoff durch Quellung bzw. Diffusion in die Dichtungsmasse transportiert wird.

Erfindungsgemäß einsetzbare Dichtstoffe können sowohl auf Silikon-, Urethan- als auch auf Acrylbasis oder etwa auf MS-Polymerbasis hergestellt werden. Dichtstoffe auf Urethanbasis sind bspw. in Ullmann's Encyclopedia of Industrial Chemistry (8. Auflage 2003, Kapitel 4) sowie US 4,417,042 offenbart. Silikondichtstoffe sind dem Fachmann bekannt, bspw. aus der EP 0 118 030 A, EP 0 316 591 A, EP 0 327 847 A, EP 0 553 143 A, DE 195 49 425 A und US 4,417,042. Beispiele für Acryldichtstoffe sind u.a. in der WO 01/09249 oder der US 5,077,360 offenbart. Beispiele für Dichtstoffe auf MS-Polymerbasis sind beispielsweise in der EP 0 824 574, US 3,971,751, US 4,960,844, US 3,979,344, US 3,632,557, DE 4029504, EP 601 021 oder der EP 370 464 offenbart.

Insbesondere sind bei Raumtemperatur vernetzende Systeme, wie bspw. in der EP 0 327 847 oder US 5,077,360 beschrieben, bevorzugt. Dabei kann es sich um ein- oder mehrkomponentige Systeme handeln, wobei in den mehrkomponentigen Systemen Katalysator und Vernetzer getrennt vorliegen können (beispielsweise offenbart in den Patentschriften US 4,891,400 und US 5,502,144), oder andere sogenannte Silikon RVT 2K-Systeme, insbesondere platinfreie Systeme.

Besonders bevorzugt sind sogenannte Einkomponentensysteme, die alle Inhaltsstoffe zum Aufbau einer Dichtungsmasse enthalten, unter Abschluß von Luftfeuchtigkeit und/oder Luftsauerstoff gelagert werden und am Einsatzort unter Reaktion mit dem Luftsauerstoff aushärten. Besonders bevorzugt sind die sogenannten Silikon-Neutralsysteme, in denen die Umsetzung von Vernetzern mit dem Wasser der Umgebungsluft nicht zu korrosiven, sauren, basischen oder geruchsintensiven Spaltprodukten führt. Beispiele für solche Systeme sind in der DE 195 49 425, der US 4,417,042 oder der EP 0 327 847 offenbart.

Die Dichtungsmassen und insbesondere Fugendichtungsmassen können wäßrige oder organische Lösungsmittel enthalten. Als organische Lösungsmittel kommen Kohlenwasserstoffe wie Cyclohexan, Toluol oder auch Xylol oder Petrolether in Frage. Weitere Lösungsmittel sind Ketone wie Methylbutylketon oder Chlorkohlenwasserstoffe.

Weiterhin können die Dichtungsmassen noch weitere kautschukartige Polymere enthalten. Hier kommen relativ niedermolekulare, handelsübliche Typen von Polyisobutylen, Polyisopren oder auch Polybutadienstyrol in Frage. Auch die Mitverwendung von abgebautem Naturkauschuk oder von Neoprenkautschuk ist möglich. Hier können auch bei Raumtemperatur noch fließfähige Typen eingesetzt werden, welche häufig als "Flüssigkautschuk" bezeichnet werden.

Die erfindungsgemäßen Dichtungsmassen können verwendet werden, um die verschiedensten Materialien miteinander zu verbinden bzw. abzudichten. Hier ist in erster Linie an die Verwendung auf Beton, auf Glas, auf Putz und/oder Emaille sowie Keramik und Porzellan gedacht. Aber auch das Verbinden bzw. Abdichten von Formteilen bzw. Profilen aus Aluminium, Stahl, Zink oder auch aus Kunststoffen wie PVC oder Polyurethanen oder Acrylharzen ist möglich. Schließlich sei das Abdichten von Holz oder Holzmaterialien mit den verschiedensten anderen Werkstoffen erwähnt.

Die Standfestigkeit von Fugendichtungsmassen wird in der Regel durch Zusatz von feinteiligen Feststoffen - auch Füllstoffe genannt - erzielt. Diese lassen sich in solche organischer und solche anorganischer Art unterscheiden. Als anorganische Füllstoffe können beispielsweise Kieselsäure/Siliciumdioxid (gecoatet oder ungecoatet), Kreide - gecoatet oder ungecoatet - und/oder Zeolithe bevorzugt sein. Letztere können zudem auch als Trockenmittel fungieren. Als organischer Füllstoff kommt z. B. PVC- Pulver in Betracht. Die Füllstoffe tragen im allgemeinen wesentlich dazu bei, dass die Dichtungsmasse nach der Anwendung einen notwendigen inneren Halt besitzt, so dass ein Auslaufen oder Ausbuchten der Dichtungsmasse aus senkrechten Fugen verhindert wird. Die genannten Zusatz- bzw. Füllstoffe lassen sich in Pigmente und thixotropierende Füllstoffe, auch verkürzt als Thixotropiermittel bezeichnet, einteilen.

Als Thixotropierungsmittel eignen sich die bekannten Thixotropierungsmittel wir Bentone, Kaoline oder auch organische Verbindungen wie hydriertes Rizinusöl bzw. Derivate desselben mit mehrfunktionellen Aminen oder die Umsetzungsprodukte von Stearinsäure oder Rizinolsäure mit Ethylendiamin. Als besonders günstig hat sich die Mitverwendung von Kieselsäure, insbesondere von Kieselsäure aus der Pyrolyse erwiesen. Außerdem kommen als Thixotropiermittel im wesentlichen quellfähige Polymerpulver in Betracht. Beispiele sind hierfür Polyacrylnitril, Polyurethan, Polyvinylchlorid, Polyacrylsäureester, Polyvinylalkohole, Polyvinylacetate sowie die entsprechenden Copolymerisate. Besonders gute Ergebnisse lassen sich mit feinteiligem Polyvinylchloridpulver erhalten. Neben den Thixotropierungsmitteln können auch noch zusätzlich Haftvermittler eingesetzt werden wie etwa Mercaptoalkylsilan. Hier hat es sich als zweckmäßig erwiesen, ein Monomercaptoalkyltrialkoxysilan einzusetzen. Handelsüblich ist beispielsweise das Mercaptopropyltrimethoxysilan.

Die Eigenschaften einer Fugendichtungsmasse lassen sich noch weiter verbessern, wenn dem als Thixotropiermittel verwendeten Kunststoffpulver weitere Komponenten zugesetzt werden. Dabei handelt es sich um Stoffe, die unter die Kategorie der für Kunststoffe angewendeten Weichmacher bzw. Quellmittel und Quellhilfsmittel fallen.

Es kommen z. B. Weichmacher, insbesondere für die Dichtungsmassen auf Urethan- bzw. Acrylbasis aus der Klasse der Phthalsäureester in Betracht. Beispiele für anwendbare Verbindungen aus dieser Substanzklasse sind Dioctylphthalat, Dibutylphthalat und Benzylbutylphthalat. Weitere geeignete Substanzklassen sind Chlorparaffine, Alkylsulfonsäureester etwa der Phenole oder Kresole sowie Fettsäureester.

Für die Silikondichtungsmassen sind als Weichmacher Silikonöle, besonders bevorzugt Polydimethylsiloxane, sowie Kohlenwasserstoffe und/oder deren Gemische, von denen besonders Kohlenwasserstoffe bzw. deren Gemische mit einem Siedepunkt von größer 200°C, insbesondere größer 230 °C, gut geeignet.

Als Quellhilfsmittel sind solche niedermolekularen organischen Substanzen einsetzbar, die mit dem Polymerpulver und dem Weichmacher mischbar sind. Derartige Quellhilfsmittel lassen sich den einschlägigen Kunststoff- und Polymer-Handbüchern für den Fachmann entnehmen. Als bevorzugte Quellhilfsmittel für Polyvinylchloridpulver dienen Ester, Ketone, aliphatische Kohlenwasserstoffe, aromatische Kohlenwasserstoffe sowie aromatische Kohlenwasserstoffe mit Alkylsubstituenten.

Als Pigmente und Farbstoffe werden die für diese Verwendungszwecke bekannten Substanzen wie Titandioxid, Eisenoxide und Ruß verwendet

Zur Verbesserung der Lagerstabilität werden bekanntermaßen den Dichtungsmassen Stabilisatoren wie Benzoylchlorid, Acetylchlorid, Toluolsulfonsäuremethylester, Carbodiimide und/oder Polycarbodiimide zugesetzt. Als besonders gute Stabilisatoren haben sich Olefine mit 8 bis 20 Kohlenstoffatomen erwiesen. Neben der stabilisierenden Wirkung können diese auch Aufgaben von Weichmachern bzw. Quellmitteln erfüllen. Bevorzugt werden Olefine mit 8 bis 18 Kohlenstoffatomen, insbesondere wenn die Doppelbindung in 1,2-Stellung angeordnet ist. Beste Ergebnisse erhält man, wenn die Molekülstruktur dieser Stabilisatoren linear ist.

Durch die erfindungsgemäße Verwendung von Ortho-Phenylphenol und/oder dessen Ester oder Ether zur Hemmung der asexuellen Vermehrung von Pilzen umgeht man das Problem der Resistenzbildung aufgrund biozider Wirkstoffe. Bei der Anwendung in schimmelgefährdeten Bau- und Bauhilfsstoffen, insbesondere in Klebstoffen, Anstrichstoffen und Dichtungsmassen, besonders bevorzugt in Fugendichtungsmassen werden durch die Hemmung der Sporenbildung mehrere erwünschte Effekte erzielt:
a) Verhinderung von Verfärbungen durch pigmentierte Sporen.
b) Verzögerung der Ausbreitung des Schimmelbefalls.
c) Verminderung der Allergenbelastung.

Eine weitere bevorzugte Ausführungsform der vorliegenden Erfindung sind Tapetenkleber, enthaltend 0,000001 bis 0,005 Gew.-% Ortho-Phenylphenol oder dessen Ester oder Ether. Tapetenkleister aus wässrigen Lösungen von Hydrokolloiden wie Methylcellulose, Methylhydroxypropylcellulose oder wasserlöslichen Stärkederivaten. Auch wässrige Dispersionen von filmbildenden Hochmolekularen wie Polyvinylacetat können, insbesondere in Verbindung mit den bereits erwähnten Cellulose- und Stärkederivaten, eingesetzt werden.

Als Filtermedien können alle bekannten Arten eingesetzt werden, solange sie für den Einsatz in Wasser- oder Luftfilteranlagen geeignet sind. Insbesondere sind Filtermaterialien aus Cellulose, Glasfasern, PVC-Fasern, Polyesterfasern, Polyamidfasern, insbesondere Nylonfasern, Vliesstoffen, Sintermaterialien und Membranfilter zu nennen.

Die erfindungsgemäßen Mittel werden nach üblichen und dem Fachmann bekannten Rezepturen hergestellt. ortho-Phenylphenol und/oder dessen Ester oder Ether werden vorzugsweise den bereits fertig zubereiteten Mitteln zugegeben, sie können aber auch während des Herstellungsprozesses zugesetzt werden, wenn dies gewünscht ist.

Die Hemmung der asexuellen Vermehrung von Pilzen auf Textilien oder Kunststoffoberflächen verhindert häufig eine Reinfektion von zuvor bereits befallenen Körperbereichen. Die Hemmung der asexuellen Vermehrung von Pilzen auf Keramiken, Kunststoffen oder Metallen verringert das Infektions- bzw. Reinfektionsrisiko, ohne die Haut, die Schleimhäute oder die Abwässer mit fungizid bzw. fungistatisch wirkenden Substanzen zu belasten. Ebenso können Katheter sowie andere aus Kunststoff oder Metallen hergestellte medizinische Geräte und/oder Prothesen durch die Verwendung von ortho-Phenylphenol und/oder dessen Derivaten beispielsweise in Spülungen oder Reinigungsmitteln weitgehend von Pilzen freigehalten werden.

Die folgenden Beispiel sollen die Erfindung erläutern, ohne sie jedoch darauf einzuschränken.

### Ausführungsbeispiele:

### Beispiel 1:

### Auswirkung von ortho-Phenylphenol (OPP) auf die Sporulation von Aspergillus niger

Kontamination der Oberfläche von Würzeagarplatten mit je 100 µl einer Keimsuspension (10³ KBE/ml) von Aspergillus niger (DSM1988). Den Agarplatten wurden zuvor unterschiedliche Mengen Wirkstoff (Lösungen in Ethanol, Endkonzentrationen siehe Tabelle) beigefügt. Die Platten wurden 3 Tage bei 25°C inkubiert. Die Sporenbildung wurde visuell beurteilt und die Sporulationsrate in [%]. bestimmt. Die eingesetzten Wirkstoffkonzentrationen behinderten das Wachstum, sofern dies nicht in den u.g. Tabellen angezeigt wird, des Prüfstamms nicht. Eine wachstumshemmende bzw. keimtötende Wirkung trat erst bei einer Konzentration von 0,05 Gew.-% OPP auf. Die Sporenbildung wurde aber bereits bei einer fünfzigfach niedrigeren Konzentration an OPP vollständig unterdrückt, ohne dass eine wachstumshemmende Wirkung auftrat.

**Tabelle 1:**

| | | | | | | | | | | |
|---|---|---|---|---|---|---|---|---|---|---|
| Konzentration OPP [%] | 0 | 0,00001 | 0,00005 | 0,0001 | 0,0005 | 0,001 | 0,005 | 0,05 | 0,1 | 1,0 |
| Sporulation [%] | 100 | 95 | 95 | 85 | 10 | 0 | 0 | Kein Wachstum | Kein Wachstum | Kein Wachstum |

Die Sporenbildung wurde mit steigenden Konzentrationen gehemmt und bei 0,001 Gew.-% Einsatzkonzentration vollständig unterdrückt.

### Vergleichsversuch:

### Auswirkung von Farnesol auf die Sporulation von Aspergillus niger

**Tabelle 2:**

| | | | | | | |
|---|---|---|---|---|---|---|
| Konzentration Farnesol [µM] | 0 | 25 | 62,5 | 125 | 250 | 500 |
| Sporulation [%] | 100 | 90 | 75 | 50 | 10 | 0 |

### Beispiel 2:

### Auswirkung von ortho-Phenylphenol-Kieselsäureester (OPP-KSE) auf die Sporulation von Aspergillus niger

Kontamination der Oberfläche von Würzeagarplatten mit je 100 µl einer Keimsuspension (10³ KBE/ml) von Aspergillus niger (DSM1988). Den Agarplatten wurden zuvor unterschiedliche Mengen Wirkstoff (Lösungen in Ethanol, Endkonzentrationen siehe Tabelle) beigefügt. Die Platten wurden 3 Tage bei 25°C inkubiert. Die Sporenbildung wurde visuell beurteilt und die Sporulationsrate in [%] bestimmt. Die eingesetzten Wirkstoffkonzentrationen behinderten das Wachstum des Prüfstamms nicht.

**Tabelle 3: ortho-Phenylphenol-Kieselsäureester**

| | | | | | | | | |
|---|---|---|---|---|---|---|---|---|
| Konzentration OPP-Kieselsäureester [%] | 0 | 0,0000 1 | 0,0000 5 | 0,0001 | 0,0005 | 0,001 | 0,005 | 0,01 |
| Sporulation [%] | 100 | 95 | 95 | 95 | 50 | 25 | 0 | 0 |

Die Sporenbildung wurde mit steigenden Konzentrationen gehemmt und bei 0,005 Gew.-% Einsatzkonzentration vollständig unterdrückt.

### Beispiel 3:

| Inhaltsstoffe | Menge |
|---|---|
| Methylhydroxyethylcellulose (300 m • Pas in 2 %iger wässriger Lösung, Methoxylgehalt 26 %) | 500 g |
| PVAcetat-Redispersionspulver | 350 g |
| Kaolin | 60 g |
| Cellulosepulver | 50 g |
| Additionsprodukt von 6 Mol Ethylenoxid an 1 Mol Nonylphenol | 10 g |
| Handelsüblicher Konservierungsstoff (Basis Isothiazolinderivat) | 8 g |
| ortho-Phenylphenol | 0,1 g |

### Beispiel 4:

| Inhaltsstoffe | Menge |
|---|---|
| Methylhydroxyethylcellulose (5000 m • Pas in 2 % wässrige Lösung, Methoxylgehalt 19 %) | 680 g |
| Carboxylmethylstärke (DS 0,22) | 300 g |
| Additionsprodukt von 4 Mol Ethylenoxid an 1 Mol Fettalkohol | 15 g |
| Handelsüblicher Konservierungsstoff (Basis Isothialzolinderivat) | 10g |
| ortho-Phenylphenol | 0,1 g |

### Beispiel 5:

| Inhaltsstoffe | Menge |
|---|---|
| Handelsübliche Polyvinylacetatdispersionenen (50 % Feststoffgehalt) | 500 g |
| Wasser | 200 g |
| Methylhydroxyethylcellulose (3000 m • Pas in 2 % wässriger Lösung) | 20 g |
| Handelsübliches Konservierungsmittel | 10 g |
| ortho-Phenylphenol | 0,1 g |

Die erhaltenen Mischungen werden mit Wasser im Verhältnis 1:20 (2) oder 1:25 (3) oder 1:1 (4) angerührt und zum Aufkleben von handelsüblichen Tapeten auf Wandflächen benutzt.

## Patentansprüche

1. Filtermedien, Baustoffe, Bauhilfsstoffe, Textilien, Pelze, Papier, Felle oder Leder, enthaltend 0,000001 bis 0,005 Gew.-% ortho-Phenylphenol und/oder dessen Derivate zur Hemmung der asexuellen Vermehrung von Pilzen, wobei es sich bei den Derivaten um Ester oder Ether des ortho-Phenylphenols handelt.

2. Klebstoff, enthaltend 0,000001 bis 0,005 Gew.-% ortho-Phenylphenol und/oder dessen Derivate zur Hemmung der asexuellen Vermehrung von Pilzen, wobei es sich bei den Derivaten um Ester oder Ether des ortho-Phenylphenols handelt.

3. Klebstoff nach Anspruch 2, **dadurch gekennzeichnet, dass** es sich um einen Klebstoff auf Wasserbasis handelt.

4. Klebstoff nach Anspruch 2 oder 3, **dadurch gekennzeichnet, dass** es sich um einen Klebstoff zur Befestigung von Tapeten und ähnlichen Wandbelagsstoffen handelt.

5. Dichtungsmasse, enthaltend 0,000001 bis 0,005 Gew.-% ortho-Phenylphenol und/oder dessen Derivate zur Hemmung der asexuellen Vermehrung von Pilzen, wobei es sich bei den Derivaten um Ester oder Ether des ortho-Phenylphenols handelt.

6. Dichtungsmasse gemäß Anspruch 5, **dadurch gekennzeichnet, dass** es sich um eine Fugendichtungsmasse handelt.

7. Zusammensetzung nach einem der Ansprüche 1 bis 6, **dadurch gekennzeichnet, dass** sie zusätzlich mindestens ein Biozid enthält.

8. Ortho-Phenylphenolkieselsäureester gemäß einer der Formeln (I) 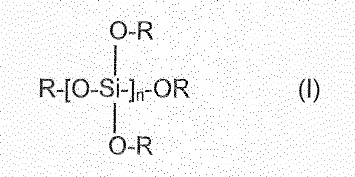 oder (II) 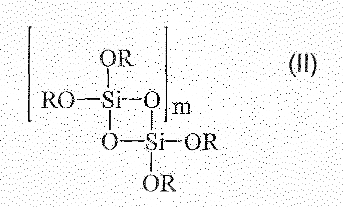 wobei mindestens ein R ortho-Phenylphenyl ist und alle anderen R unabhängig voneinander ausgewählt sind aus der Gruppe, die H, die geradkettigen oder verzweigten, gesättigten oder ungesättigten, substituierten oder unsubstituierten C₁₋₆-Kohlenwasserstoffreste, Terpenalkohole, sowie Polymere enthält, und m Werte aus dem Bereich 1 bis 20 und n Werte aus dem Bereich 1 bis 100 annimmt.

9. Käfigmoleküle, die mit ortho-Phenylphenol oder einem Derivat davon beladen sind, wobei es sich bei den Derivaten um Ester oder Ether des ortho-Phenylphenols handelt.

## Claims

1. Filter media, construction materials, construction auxiliaries, textiles, furs, paper, pelts or leather containing 0.000001 to 0.005 wt% ortho-phenylphenol and/or derivatives thereof in order to inhibit asexual reproduction of fungi, wherein the derivatives are esters or ethers of ortho-phenylphenol.

2. An adhesive containing 0.000001 to 0.005 wt% ortho-phenylphenol and/or derivatives thereof in order to inhibit asexual reproduction of fungi, wherein the derivatives are esters or ethers of ortho-phenylphenol.

3. The adhesive according to Claim 2, **characterized in that** it is a water-based adhesive.

4. The adhesive according to Claim 2 or 3, **characterized in that** it is an adhesive for the attachment of wallpapers and similar wall covering materials.

5. A sealing compound containing 0.000001 to 0.005 wt% ortho-phenylphenol and/or derivatives thereof in order to inhibit asexual reproduction of fungi, wherein the derivatives are esters or ethers of ortho-phenylphenol.

6. The sealing compound according to Claim 5, **characterized in that** it is a joint sealing compound.

7. The composition according to one of Claims 1 to 6, **characterized in that** it additionally contains at least one biocide.

8. Ortho-phenylphenol silicic acid esters in accordance with one of formulas (I) 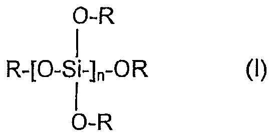 or (II) 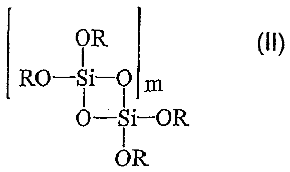 wherein at least one R is ortho-phenylphenyl and all other R are selected mutually independently from the group that contains hydrogen, straight-chained or branched, saturated or unsaturated, substituted or unsubstituted C₁₋₆ hydrocarbon residues, terpene alcohols, and polymers, and m assumes values from the range 1 to 20 and n assumes values from the range 1 to 100.

9. Cage molecules that are loaded with ortho-phenylphenol or a derivative thereof, wherein the derivatives are esters or ethers of ortho-phenylphenol.

## Revendications

1. Milieux filtrants, matériaux de construction, auxiliaires de matériaux de construction, textiles, fourrures, papier, peaux ou cuirs, contenant de 0,000001 à 0,005 % en poids d'ortho-phénylphénol et/ou de ses dérivés pour inhiber la multiplication asexuée de champignons, dans lesquels, en ce qui concerne les dérivés, il s'agit d'esters ou d'éthers de l'orthophénylphénol.

2. Adhésif contenant de 0,000001 à 0,005 % en poids d'ortho-phénylphénol et/ou de ses dérivés pour inhiber la multiplication asexuée de champignons, dans lequel en ce qui concerne les dérivés, il s'agit d'esters ou d'éthers de l'ortho-phénylphénol.

3. Adhésif selon la revendication 2, **caractérisé en ce qu'**il s'agit d'un adhésif à base d'eau.

4. Adhésif selon la revendication 2 ou 3, **caractérisé en ce qu'**il s'agit d'un adhésif pour la fixation de papier peint et de substances analogues pour le revêtement de murs.

5. Agent d'étanchéité contenant de 0,000001 à 0,005 % en poids d'orthophénylphénol et/ou de ses dérivés pour inhiber la multiplication asexuée de champignons, dans lequel en ce qui concerne les dérivés, il s'agit d'esters ou d'éthers de l'ortho-phénylphénol.

6. Agent d'étanchéité selon la revendication 5, **caractérisé en ce qu'**il s'agit d'un agent d'étanchéité pour des joints.

7. Composition selon l'une quelconque des revendications 1 à 6, **caractérisée en ce qu'**elle contient en outre au moins un biocide.

8. Ester de l'acide ortho-phénylphénolsilicique répondant à l'une quelconque des formules : 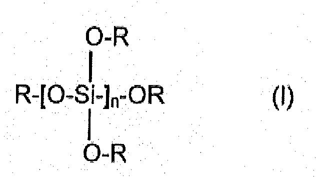 ou (II) 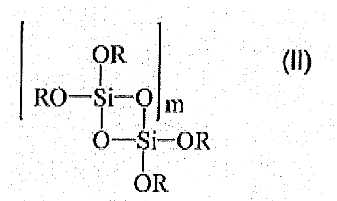 dans laquelle au moins un résidu R représente un groupe orthophénylphényle et tous les autres résidus R sont choisis, indépendamment les uns des autres, parmi le groupe qui contient un atome d'hydrogène, des résidus d'hydrocarbures en C₁-C₆ à chaîne droite ou ramifiée, saturés ou insaturés, substitués ou non substitués, des alcools terpéniques ainsi que des polymères, et m prend des valeurs dans la plage de 1 à 20 et n des valeurs dans la plage de 1 à 100.

9. Clathrates qui sont chargées avec de l'ortho-phénylphénol ou avec un dérivés de ce dernier, dans lesquelles, en ce qui concerne les dérivés, il s'agit d'esters ou d'éthers de l'ortho-phénylphénol.
